## Europäisches Patentamt

## European Patent Office

## Office européen des brevets

(19)

(11) Veröffentlichungsnummer: **0 158 991**
**A2**

# (12) EUROPÄISCHE PATENTANMELDUNG

(21) Anmeldenummer: 85104476.8

(22) Anmeldetag: 12.04.85

(51) Int. Cl.⁴: **B 60 S 1/40**

(30) Priorität: 19.04.84 DE 3414863

(43) Veröffentlichungstag der Anmeldung:
23.10.85 Patentblatt 85/43

(84) Benannte Vertragsstaaten:
BE DE FR GB IT SE

(71) Anmelder: FORD-WERKE AKTIENGESELLSCHAFT
Ottoplatz 2 Postfach 21 03 69
D-5000 Köln 21(DE)

(84) Benannte Vertragsstaaten:
BE DE IT SE

(71) Anmelder: FORD MOTOR COMPANY LIMITED
Eagle Way
Brentwood Essex CM13 3BW(GB)

(84) Benannte Vertragsstaaten:
GB

(71) Anmelder: FORD FRANCE SOCIETE ANONYME
344 Avenue Napoléon Bonaparte B.P. 307
F-92506 Rueil Malmaison Cedex(FR)

(84) Benannte Vertragsstaaten:
FR

(72) Erfinder: Barret, David
Jakobusweg 8
D-5000 Köln 40(DE)

(72) Erfinder: Häfele, Fritz
Schaevenstrasse 13
D-5014 Kerpen(DE)

(74) Vertreter: Ritzkowsky, Harald, Dipl.-Ing.
Ford-Werke Aktiengesellschaft Patentabteilung Z/DRR-2
Ottoplatz 2
D-5000 Köln 21(DE)

(54) Scheibenwischer für Kraftfahrzeuge.

(57) Bei einem Scheibenwischer für Kraftfahrzeuge mit einem hakenförmigen nach unten gebogenen Wischerarmende, das auf einem mit einer geschlitzten Lagerbuchse auf eine Lagerachse zwischen den Seitenwangen eines Wischerblattbügels aufgesetzten V-förmigen Befestigungsclipes in Richtung auf dessen Scheitel zwischen nach außen ragenden Rändern an den gegenüberliegenden federnden Schenkeln einsetzbar und über eine Rastöffnung an einer Rastnase im unteren Schenkel verrastbar ist, ist das nach unten abgebogene hakenförmige Wischerarmende (12) kürzer als die vor dem Scheitel (4) des Befestigungsclipses (1) liegende freie Öffnung (X) des Wischerblattbügels (13) und der untere Schenkel (3) des Befestigungsclipses (1) ist länger als die hinter der Lagerachse (14) des Wischerblattbügels (13) liegende freie Öffnung (Y) desselben und weist einen vom Schenkel (3) weg abragenden Betätigungsvorsprung (10)auf.

FIG.3a

- 1 -

PATENTANMELDUNG


SCHEIBENWISCHER FÜR KRAFTFAHRZEUGE

Die Erfindung bezieht sich auf einen Scheibenwischer für Kraftfahrzeuge, der im Oberbegriff des Patentanspruchs erläuterten Art.

Aus der DE-PS 16 55 086 ist bereits ein Scheibenwischer für Kraftfahrzeuge der im Oberbegriff erläuterten Art bekannt, wobei der V-förmige Befestigungsclip aus Kunststoff besteht und ein Entrasten des eine Rastnase tragenden unteren Schenkels durch Anheben des freien Endes dieses Schenkels möglich ist.

Aus der DE-PS 24 01 081 ist ein ähnlicher Scheibenwischer für Kraftfahrzeuge bekannt, bei dem jedoch die Verbindung von Wischerarmende und Wischerblattbügel von unten her erfolgt. Zur Entrastung des die Rastnase aufweisenden federnden Schenkels ist ein Betätigungsvorsprung vorgesehen, der über den Wischerblattbügel hochsteht.

Der erstgenannte bekannte Scheibenwischer weist den Nachteil auf, daß der auf die Lagerachse zwischen den Seitenwangen des Wischerblattbügels aufgesetzte V-förmige Befestigungsclip sich innerhalb der Öffnung des Wischerblattbügels frei durchdrehen kann, wodurch es einerseits zu einer Falschmontage des Wischerarmendes kommen kann und andererseits beim Abheben des Wischerarmendes von der Windschutzscheibe es zu einem unerwünschten Umklappen des Wischerblattbügels kommen kann.

Zur Behebung dieses Nachteiles wurde bereits gemäß dem DE-GM 75 01 335 vorgeschlagen, den oberen Schenkel des V-förmigen Befestigungsclipes etwas länger als den entsprechenden Teil der Öffnung im Wischerblattbügel auszuführen, wodurch einerseits eine Falschmontage und andererseits ein Umklappen des Wischerblattbügels vermieden werden konnte.

- 2 -

Nach wie vor wiesen diese beiden bekannten Scheibenwischer jedoch den Nachteil auf, daß zur Montage des Wischerblattbügels am Wischerarmende der Wischerarm von der Windschutzscheibe hochgeklappt werden mußte, hierauf das abgebogene Wischerarmende durch den entsprechenden Teil der Öffnung im Wischerblattbügel hindurchgeführt werden mußte, um ihn auf den Scheitel des Befestigungsclipses aufschieben zu können.

Bei dem zweitgenannten bekannten Scheibenwischer waren diese Nachteile vermieden, dieser Scheibenwischer weist jedoch den Nachteil auf, daß durch das unübliche nach oben abgebogene Wischerarmende der Wischerarm unterhalb des Wischerblattbügels zu liegen kam, was zu einer großen Bauhöhe des Wischerblattbügels führte, da der Wischerarm genügend Bewegungsfreiheit gegenüber der ihm unmittelbar benachbarten Windschutzscheibe aufweisen mußte.

Die Aufgabe der Erfindung ist es, einen Scheibenwischer für Kraftfahrzeuge der im Oberbegriff des Anspruchs erläuterten Art derart zu verbessern, daß eine einfache parallel zum Scheibenwischerarm erfolgende Montage möglich ist und gleichzeitig ein Umkippen des Wischerblattbügels vermieden werden kann. Weiterhin soll ein einfaches Entrasten durch das Vorsehen eines Betätigungsvorsprunges ermöglicht werden.

Gemäß der Erfindung wird diese Aufgabe gelöst, indem ein Scheibenwischer für Kraftfahrzeuge gemäß dem Oberbegriff des Patentanspruchs die im Kennzeichenteil des Patentanspruchs aufgezeigten Merkmale aufweist.

Dadurch, daß das nach unten abgebogene hakenförmige Wischerarmende kürzer als die vor dem Scheitel des Befestigungsclipses liegende freie Öffnung im Wischerblattbügel gehalten ist und der untere Schenkel des Befestigungsclipses länger als die hinter der Lagerachse des Wischerblattbügels liegende freie Öffnung desselben ausgebildet ist und in an sich bekannter Weise einen vom Schenkel weg abragenden Betätigungsvorsprung zum Entrasten aufweist, wird ein einfaches Montieren von Wischerarmende und Wischerblattbügel, ausgehend von einer parallelen Lage durch senkrecht Aufeinanderzubewegen und darauffolgendes Verschieben

- 3 -

in Längsrichtung des Wischerarmes ermöglicht und weiterhin eine Sicherung gegen unerwünschtes Hochklappen des Wischerblattbügels bereitgestellt und darüberhinaus durch den abragenden Betätigungsvorsprung eine sichere und leichte Demontage ermöglicht.

Die Erfindung wird anhand eines in den beiliegenden Zeichnungen gezeigten Ausführungsbeispieles näher erläutert.

Es zeigt:

FIG. 1       eine Schrägrißansicht eines V-förmigen
             Befestigungsclipses;

FIG. 2       eine Schrägrißansicht eines nach unten gebogenen
             Wischerarmendes unmittelbar vor seiner Montage an einem
             bereits im Wischerblattbügel montierten Befestigungsclip
             und

FIG. 3a, b, c und d
             Schnittdarstellungen des Scheibenwischers gemäß der Erfindung vor der Montage, nach der Montage, beim Verhindern des Umklappens und beim Entrasten.

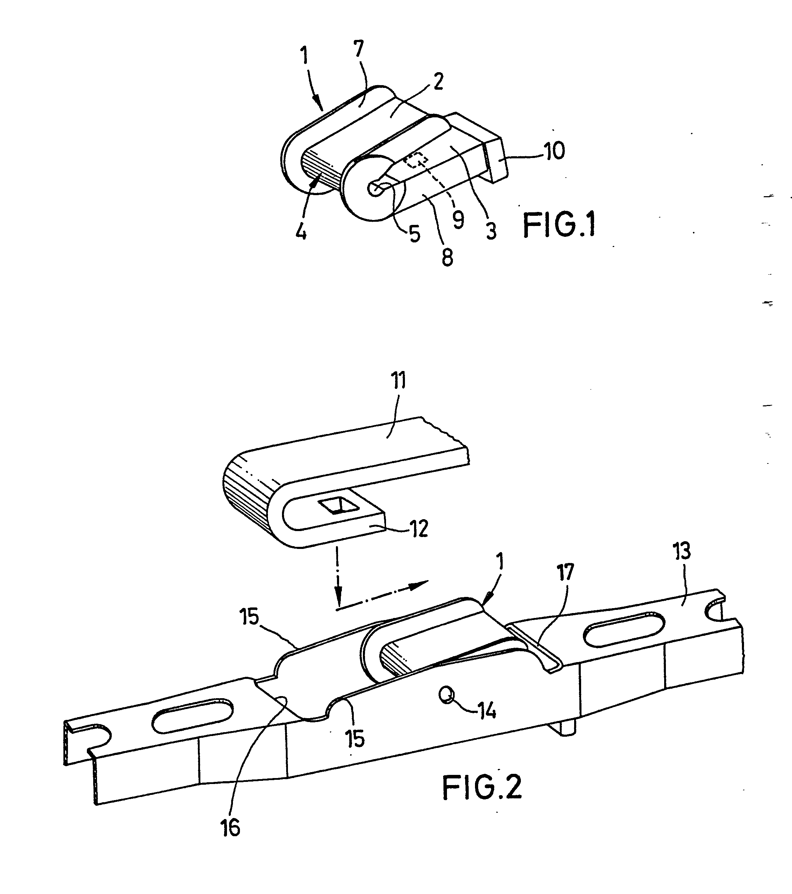

In FIG. 1 besteht ein V-förmiger Befestigungsclip 1 aus zwei gegenüberliegenden Schenkeln 2 und 3, die an ihrem Scheitel 4 eine geschlitzte Lagerbuchse 5 bilden. Die federnden Schenkel 2 und 3 sind mit nach außen ragenden Rändern 7 und 8 versehen. Der untere federnde Schenkel 3 ist an seiner Außenseite mit einer Rastnase 9 versehen,und weist zum Erleichtern des Entrastens einen Betätigungsvorsprung 10 auf.

Wie aus FIG. 2 zu ersehen ist, weist ein Wischerarm 11 ein nach unten gebogenes Wischerarmende 12 auf.

Ein Wischerblattbügel 13 weist im Bereich seiner Lagerachse 14 im wesentlichen ebene Seitenwangen 15 auf, die zusammen mit einer vorderen Ausschnittkante 16 und einer hinteren Ausschnittkante 17 eine freie Öffnung im Wischerblattbügel 13 begrenzen.

Ein im grundsätzlichen bekannter V-förmiger Befestigungsclip 1 ist an der Lagerachse 14 des Wischerblattbügels 13 aufgesetzt.

Eine Montage des Wischerarmendes 12 auf dem Befestigungsclip 1 erfolgt hierbei in den in Fig. 2 in Strich-Punkt-Pfeilen angegebenen Montagebewegungen.

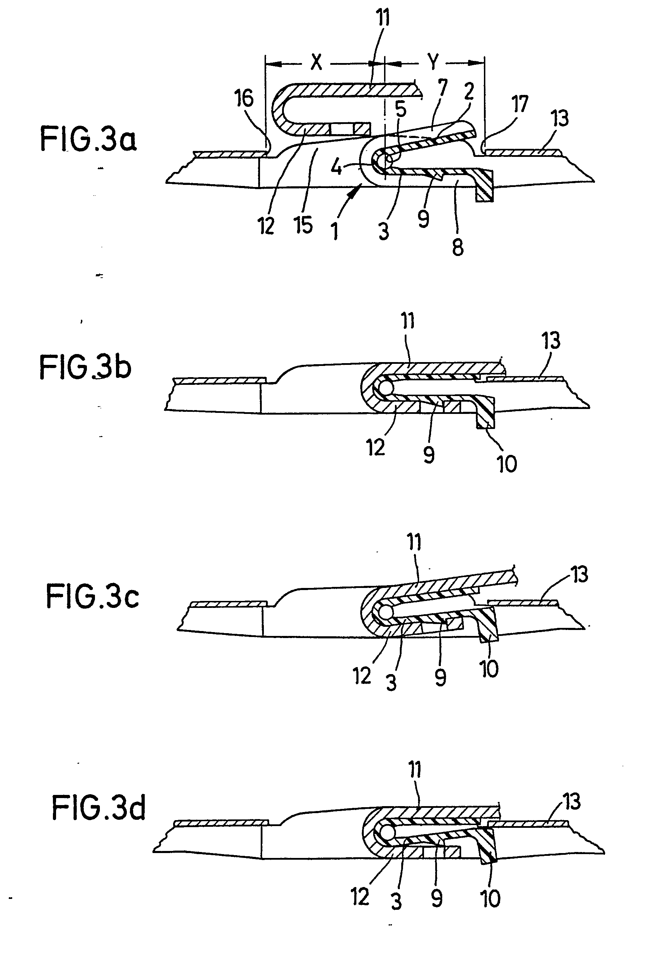

Wie aus den FIG. 3a bis 3d zu ersehen ist, ist das nach unten abgebogene hakenförmige Wischerarmende 12 kürzer als der Abstand X zwischen dem Scheitel 4 des V-förmigen Befestigungsclipses 1 und der vorderen Ausschnittkante 16 der Öffnung im Wischerblattbügel 13, so daß das Wischerarmende 12 aus einer parallelen Lage zum Wischerblattbügel 13 unmittelbar durch die Öffnung X eingesenkt werden kann. Durch darauffolgendes Verschieben in Längsrichtung des Wischerarmes wird der montierte Zustand, wie in FIG. 3b gezeigt, erreicht.

Der untere Schenkel 3 weist hierbei eine Länge auf, die größer ist als der Abstand Y der Lagerachse 14 von der hinteren Ausschnittkante 17, so daß ein Wegschwenken des Wischerarmbügels, wie in FIG. 3c gezeigt, nur um einen geringen Betrag möglich ist.

Wie aus der FIG. 3b in Verbindung mit der FIG. 3d leicht zu erkennen ist, kann der Betätigungsvorsprung 10 unten etwas über den unten offenen Wischerblattbügel 13 vorragen, so daß er günstig mit den Fingern betätigt werden kann, um den Wischerblattbügel vom Wischerarm zu entrasten.

Die besondere Abstimmung der Abmessungen des Wischerarmendes in Verbindung mit den freien Öffnungen im Wischerblattbügel ermöglicht auf überraschend einfache Weise ein aus einer parallelen Anordnung erfolgendes Montieren der beiden Bauteile, ohne daß hierzu der Wischerarm weit von der Windschutzscheibe abgehoben werden muß. Dadurch ist ein Scheibenwischer gemäß der Erfindung insbesondere für Kraftfahrzeuge geeignet,
bei denen die unteren Bereiche der Wischerarme versenkt und durch einen hinteren Rand der Motorhaube abgedeckt angeordnet sind.

- 1 -

## PATENTANSPRUCH

Scheibenwischer für Kraftfahrzeuge mit einem hakenförmigen nach unten gebogenen Wischerarmende, das auf einen mit einer geschlitzten Lagerbuchse auf eine Lagerachse zwischen den Seitenwangen eines Wischerblattbügels aufgesetzten V-förmigen Befestigungsclip in Richtung auf dessen Scheitel zwischen nach außen ragenden Rändern an den gegenüberliegenden federnden Schenkeln einsetzbar und über eine Rastöffnung an einer Rastnase am unteren Schenkel verrastbar ist, dadurch gekennzeichnet, daß das nach unten abgebogene, hakenförmige Wischerarmende (12) kürzer als die vor dem Scheitel (4) des Befestigungsclipses (1) liegende freie Öffnung (X) im Wischerblattbügel (13) und der untere Schenkel (3) des Befestigungsclipses (1) länger als die hinter der Lagerachse (14) des Wischerblattbügels (13) liegende freie Öffnung (Y) desselben ist und in an sich bekannter Weise einen vom Schenkel (3) weg abragenden Betätigungsvorsprung (10) zum Entrasten aufweist.

0158991

FIG.1

FIG.2

FIG.3a

FIG.3b

FIG.3c

FIG.3d